# EUROPÄISCHE PATENTSCHRIFT

(11) **EP 1 097 558 B1**
(45) Veröffentlichungstag und Bekanntmachung des Hinweises auf die Patenterteilung: **04.01.2006**
(21) Anmeldenummer: 99924855.2
(22) Anmeldetag: 30.04.1999
(51) Int. Cl.: H04M 3/50

(54) **VERFAHREN ZUM BETREIBEN EINES GLOBALEN, VIRTUELLEN CALL-CENTERS**
METHOD FOR OPERATING A GLOBAL VIRTUAL CALL-CENTRE
PROCEDE D'EXPLOITATION D'UN CENTRE DE COMMUNICATIONS VIRTUELLES MONDIALES

(30) Priorität: 24.06.1998 DE 19830007
(43) Veröffentlichungstag der Anmeldung: 09.05.2001
(73) Patentinhaber: Deutsche Telekom AG, 64307 Darmstadt (DE)
(72) Erfinder: TRINKEL, Marian, D-53393 Hürtgenwald (DE); MÜLLER, Christel, D-15732 Schulzendorf (DE); RUNGE, Fred, D-15838 Wünsdorf (DE); ZIEM, Thomas, D-16341 Zepernik (DE)
(86) Internationale Anmeldenummer: PCT/EP1999/002953
(87) Internationale Veröffentlichungsnummer: WO 1999/067939

(56) Entgegenhaltungen:
- EP-A- 0 660 573
- EP-A- 0 740 445
- EP-A- 0 753 956
- WO-A-97/24862
- US-A- 5 506 894
- DRESNER S: "JUST PICK UP YOUR COMPUTER AND DIAL" COMMUNICATIONS NEWS, 1. Februar 1998 (1998-02-01), Seite 42/43 XP000770873
- CRAY A: "MAJOR HASSLES, MAJOR PAYOFFS" DATA COMMUNICATIONS, Bd. 26, Nr. 13, 1. Oktober 1997 (1997-10-01), Seiten 127-130, 132, 13, XP000723265 ISSN: 0363-6399
- SILLING J: "CTI, PIECE BY PIECE" BYTE, Bd. 22, Nr. 2, 1. Februar 1997 (1997-02-01), Seiten 85-88, 90, XP000680522 ISSN: 0360-5280
- PATENT ABSTRACTS OF JAPAN vol. 010, no. 376 (E-464), 13. Dezember 1986 (1986-12-13) & JP 61 169060 A (NEC CORP), 30. Juli 1986 (1986-07-30)
- PARIS G ET AL: "THE NEXT GENERATION CALL CENTER" TELCOM REPORT INTERNATIONAL, Bd. 19, Nr. 4, 1. Januar 1996 (1996-01-01), Seiten 9-11, XP000618796

## Beschreibung

Die Erfindung betrifft ein Verfahren zum Betreiben eines globalen, virtuellen Call-Centers nach dem Patentanspruch 1.
Call -Center sind auf Dienstleistungen ausgerichtet, welche über Operatoren/Agenten abgewickelt werden. Dem Anrufer/Kunden werden im Rahmen der Dienstleistungen des Call-Centers Sprach- und/oder Datendienste angeboten.

Verfahren dieser Art werden zumeist über ein zentrales Telefonserversystem abgewickelt. Dabei werden einem Operator über ein Call-Center-System Kunden zugeführt. Der Operator wird per Telefon mit dem Kunden verbunden und steht diesem für die gewünschte Dienstleistung zur Verfügung.

Bekannt ist ein Call-Center für das Internet (ICC), das von der Fa. Sitel Corp. und Lucent Technologies in Betrieb genommen wurde, und in dem Sprache und Daten gemeinsam über eine analoge Telefonleitung angeboten werden (siehe Handelsblatt, Dienstag, 27.01.1998 beu Hamburg "Call-Center fürs Internet"). Zielgruppen sind dabei insbesondere Fluggesellschaften, Touristikunternehmen, Banken und Versicherungen.
Beim ICC klickt ein Kunde eine Webseite im Internet an, um den Dialog mit einem Call-Center-Mitarbeiter (Operator) zu beginnen.
Aus dem Dokument Silling J.: "CTI, PIECE BY PIECE", Bte, Bd. 22 Nr.2 vom 01.02.1997, Seite 85-88 ist eine Lösung bekannt, bei der auf eine automatische Rufnummernidentifizierung (ANI) für ankommende Verbindungen zugegriffen wird. Kommt ein Anruf im Unternehmen an, zieht sich die automatische Anrufverteilung bzw. die Nebenstellenanlage die ANI-Daten heraus, kombiniert diese mit einer internen Nebenstelle und sendet die Anruferinformation zu einem CTI-Server. Der CTI-Server vergleicht die Anruferkennung und die Nebenstelle mit seiner Datenbank, um den richtigen PC zu finden. Danach erzeugt der CTI-Server einen Datensatz und sendet diesen zu einer Kundendatenbank. Dieser Datensatz erfordert, daß die zur Rufnummer des Anrufers gehörende Kundeninformation zum bestimmungsgemäßen PC im Unternehmen geleitet wird.
In dem Dokument Cray, A: "Major Hassles, Major Payoffs" Data Communications, Bd. 26, Nr. 3, Oktober 1997, Seite 127-130 wird ein herkömmliches Call-Center beschrieben, bei dem hunderte mit Sprechgarnituren ausgerüstete an eine Nebenstellenanlage angeschlossen sind, zu der auch eine automatische Anrufverteilung (ACD) gehört. Eine interaktive Sprachausgabe- Einrichtung (IVR) spielt eine Ansage ein, die die Kunden auffordert, durch Tasteneingabe auf ihrem Telefontastenfeld genaue Angaben zu ihrem Anruf zu machen. Die ACD übernimmt die Kundenangaben und nutzt sie, um einen geeigneten Agenten für die Bearbeitung des Anrufes zu ermitteln. Durch diesen Agenten wird der Kunde dann bedient.

Aus EP-A-0 753 956 ist eine Lösung bekannt, die auf einem unternehmenseigenen Netzwerk (wide area network) basiert. Bei dieser Lösung wird der Anschluß des Kunden ebenfalls über die ANI ermittelt. In einem Host-Computer befindet sich eine Archivdatenbank mit Kundenangeben. Die Kundendaten werden den Agents zur Verfügung gestellt. Der Agent kann die Kundendaten reklamieren und neue Kundendaten anfordern

Aus dem Dokument Dresner, S. "Just pick up your computer and dial" Communications News, Februar 1998, S. 24-43 ist es bekannt, Verbindungen im Rahmen eines Call-Centers auch über Internettelefonie aufzubauen.

Bei den bekannten Call-Centern werden die Verbindungen zwischen den Servern und den Arbeitsplätzen der Operatoren über LAN-Verbindungen realisiert.
Die Nachteile derartiger Lösungen sind darin zu sehen, daß derartige Netze aufgrund ihrer Netzstruktur wenig flexibel sind, und daß insbesondere bei weltweit agierenden Call-Centern durch die ständige Verbindung hohe Verbindungskosten auftreten.

Bei Call-Centern, die international agieren, können sowohl die Operatoren als auch die Kunden weltweit angesiedelt sein und damit unterschiedlichsten Sprachkreisen angehören. Daraus ergibt sich ein allgemeines Verständigungsproblem, insbesondere zwischen Operator und Kunden.

Ein weiterer Mangel wird darin gesehen, daß der Operator nach Vermittlung eines Kunden über den Server zumeist keine Informationen über den Kunden besitzt, die geeignet sind, den Kunden eindeutig zu identifizieren. Das ist, insbesondere für die Abrechnung der Dienstleistung des Kunden, problematisch, da die als Operator tätigen Mitarbeiter des Call-Centers, die letztendlich die Dienstleistung für den Kunden abwickeln, ihren Arbeitsplatz, insbesondere bei international agierenden Call-Centern, in einem anderen Land als der Kunde haben können.

Die der Erfindung zugrunde liegende Aufgabe besteht darin, ein Verfahren zu entwickeln, welches es ermöglicht, ein Call-Center mit weltweit agierenden Operatoren, die über einen Internetzugang, einen PC mit Betriebssystem, einen üblichen WEB-Browser sowie über einen Kommunikationsendgeräteanschluß verfügen, zu betreiben und bei Bedarf den Verbindungsaufbau vom Kunden zum Operator nach im Call-Center festgelegten Regeln aufzubauen. Dabei soll insbesondere der Dialog zwischen Kunden und Operator erleichtert und eine bessere Rechtssicherheit für weltweite Abrechnungsprozesse im Dienstleisungsbereich zwischen dem Betreiber des Call-Centers, den für das Call-Center tätigen Operatoren und den Kunden erreicht werden.

Die Aufgabe wird erfindungsgemäß dadurch gelöst, daß bei Anruf eines Kunden nach Herstellung der Verbindung zwischen Kunden und Call-Center-Server automatisch spezifische Daten, die geeignet sind, den Kunden zu identifizieren und ihn einer Kundengruppe zuzuordnen, erfaßt werden. Unter spezifischen Daten werden im erfindungsgemäßen Sinn Daten verstanden, die eine örtliche Identifizierung des Kommunikationsendgeräteanschlusses und/oder eine Identifizierung der Person des anrufenden Kunden, bzw. die Zuordnung des Teilnehmeranschlusses zu einem Sprachkreis oder einer anderen Kundengruppe ermöglichen.
Erfindungsgemäß werden nach Herstellung der Verbindung Daten erfaßt, die geeignet sind, zur Identifizierung des anrufenden Kunden beizutragen. Zu diesen Daten wird beispielsweise die Kennung des Kommunikationsendgeräteanschlusses des anrufenden Kunden gerechnet. Durch die Anschtußkennung kann der Anschluß des anrufenden Kunden identifiziert und zugeordnet werden.
In einem weiteren Schritt werden die Daten des Kunden über ein als Suchroutine ausgebildetes Regelwerk mit den Daten der für das Call-Center angemeldeten Operatoren verglichen. Vergleichskriterium kann beispielsweise eine gemeinsame Sprache oder ein Fachgebiet sein, dem die Anfrage des Kunden zugrunde liegt.
Das Ergebnis des auf der o.g. Basis beschriebenen Vergleichs dient als Ausgangsinformation für die Zuweisung eines für den Kunden geeigneten Operators.
Diese Suche erfolgt ebenfalls anhand eines Programms im Call-Center-Server. Wenn ein geeigneter Operator gefunden ist, wird vom Call-Center-Server eine Verbindung zu dem WEB-Browser des ausgewählten Operators hergestellt.

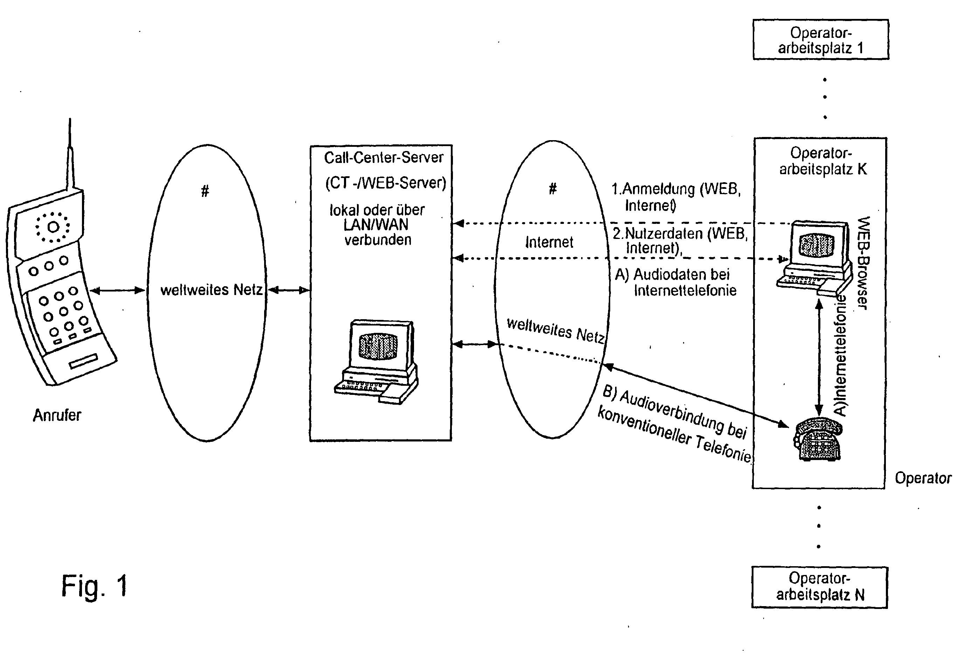

Das erfindungsgemäße Verfahren wird anhand eines Ausführungsbeispiels näher erläutert. Fig. 1 zeigt den grundsätzlichen Aufbau einer Verbindung von einem an das Internet angeschlossenen Call-Center-Server zu einem weltweit über das WWW (World Wide Web) angemeldeten Operator zur Übertragung von Sprach- und/oder Bild sowie Dateninformationen im Rahmen eines Call-Centers.

Gemäß Fig. 1 besteht das zentrale Kernstück des Call-Centers aus einem an das Internet angeschlossenen WEB-Server. In der vorliegenden Ausführungsform wird als Datenserver ein WEB-Server mit HTTP angeschaltet, der mit einem Telefonieserver (CT-Server) verbunden ist. Über diese Konfiguration können sowohl konventionelle Telefonverbindungen als auch Internettelefonieverbindungen aufgebaut werden. Die Wahl des WEB-Servers bietet den Vorteil, daß für die Verbindung zwischen WEB-Server und Operator ein Standard WEB-Browser, wie beispielsweise ein Netscape-Mikrosoft- Explorer oder ein Netscape- Navigator auf Seiten des Operators eingesetzt werden kann. Die bei Call-Centern bisher üblichen speziellen Darstellungsmechanismen entfallen daher. Der WEB-Browser ist bei der Ausführungsform nach Fig. 1 dem Arbeitsplatzsystem des Operators zugeordnet.

Das erfindungsgemäße Verfahren wird anhand eines Ausführungsbeispiels näher erläutert, bei dem Ausgangspunkt der Anruf eines Kunden beim Call-Center ist.
Ein Kunde (Anrufer) ruft über sein Kommunikationsendgerät einen im CT-/WEB-Server definierten Dienst an Nach Herstellung der Kommunikationsverbindung zwischen Kunden und Server wird vom Call-Center die Identität des anrufenden Kunden z.B. über die Anschlußkennung CLI (Calling Line Identification)oder ANI erfaßt und gespeichert.
Auch ist es möglich, daß der Call-Center-Server aktiv eine Verbindung zu einem Kunden auf Grund von abgelegten Regeln bzw. auf Kundenwunsch aufbaut. Die so erfaßten Daten können bereits als Grunddaten für die Suche nach einem für diesen Kunden geeigneten Operator herangezogen werden. Dazu werden anhand eines im Call-Center-Server gespeicherten Suchprogramms die Daten der Kennung des Kunden mit im System des Call-Centers gespeicherten Daten der für das Call-Center agierenden Operatoren verglichen. Nach Feststellung der für den Kunden geeigneten Gruppe von Operatoren erfolgt die Auswahl eines Operators anhand von weiteren im Call-Server gespeicherten Regeln und Kriterien.
Das Suchprogramm vergleicht die ermittelten Daten der Kennung des Kunden mit den Daten der Operatoren aus der bereits im ersten Suchschritt ermittelten Gruppe von Operatoren. Die Suche nach einem für den Kunden geeigneten Operator wird dabei anhand von geeigneten Suchregeln, die in Form von Suchroutinen gespeichert sind, durchgeführt.
Vor Abarbeitung der Suchroutine wird überprüft, welcher der Operatoren der ermittelten Gruppe zur Zeit in Bereitschaft und damit frei für einen neuen Kunden ist.
Die Regeln können beispielsweise als Suchroutinen des Call-Center-Servers ausgebildet sein, die als Ausscheidungskriterien definierte Anweisungen enthalten.
Die einfachste Anweisung wäre, den ersten freien Operator der ermittelten Gruppe von Operatoren anzuwählen und mit dem Kunden zu verbinden.

Es wäre an dieser Stelle aber auch möglich, weitere Kriterien abzuprüfen, die eine noch spezifischer auf den Kunden zugeschnittene Auswahl des Operators ermöglichen.
Für eine derartige Prüfung bietet es sich beispielsweise an zu prüfen, welcher Operator aus der ermittelten Gruppe geeignet ist, den Wunsch des Kunden zu erfüllen.

Voraussetzung für eine derartige Suchroutine ist allerdings, daß der Kunde bereits über ein Dialogsystem nach der von ihm gewünschten Dienstleistung abgefragt wurde. Für die Auswahl der Sprache, in der das Dialogsystem mit dem Kunden kommuniziert, ist hier die bereits erfolgte Zuordnung des Kunden zu einem Sprachkreis bzw. sind andere aus dem Netz zur Verfügung stehende Daten heranzuziehen.
Sollte eine Verständigung insbesondere dann nicht zustande kommen, wenn der Kunde nicht dem Sprachkreis zuzuordnen ist, der durch die Anschlußkennung des benutzten Telekommunikationsendgerätes vorgegeben ist, wird anhand bereits vom Kunden vorliegenden Sprachäußerungen oder durch gezielte Abfrage anhand eines sprachgestützten Suchalgorithmus geprüft, welche Sprache der Kunde spricht. In diesem Zusammenhang bietet es sich an, den Kunden über das Sprachdialogsystem in seiner Muttersprache nach der von ihm gewünschten Dienstleistung abzufragen.
Bei Feststellung eines solchen Sachverhaltes werden die Ergebnisse der bisherigen Suche nach einem geeigneten Operator verworfen, und es erfolgt unter Zugrundelegung der Information über die Sprache des Kunden eine erneute Suche nach geeigneten Operatoren.

Nach erfolgter Abfrage des Kunden bietet es sich weiterhin an, mittels einer Suchroutine abzuprüfen, welcher der Operatoren aus der bereits ermittelten Gruppe von Operatoren den Themenkreis bearbeitet, dem die vom Kunden gewünschte Dienstleistung zugeordnet ist.

Nach der Ermittlung des für den Kunden geeignetesten Operators wird vom Call-Center-Server über das Telekommunikationsnetz eine Audioverbindung zu dem ausgewählten Operator hergestellt und zum Kunden durchgeschaltet. Die Telekommunikationsverbindung zwischen dem Call-Center-Server und dem anrufenden Kunden kann wahlweise, sowohl über das existierende Telefonnetz, als auch über das Internet oder andere Netze aufgebaut werden.
Das heißt, die Verbindung kann beispielsweise als Audioverbindung mittels konventioneller Telefonie oder als Audioverbindung über Internettelefonie, wie in Fig. 1 abgebildet, hergestellt werden. Auf der Seite des Operators ist neben einem geeigneten PC nur ein WEB-Browser zur Darstellung anrufspezifischer Daten, sowie eine Einrichtung zur Internettelefonie oder ein Telefonanschluß erforderlich.
Mit dem vom Kunden beim Operator über den Call-Center-Server eingehenden Ruf werden im WEB-Browser-Fenster auf dem Bildschirm des Operatorarbeitsplatzes erfindungsgemäß alle bereits in den vorherigen Schritten über den Call-Center-Server erfaßten Daten des anrufenden Kunden, wie z.B. Rufnummer und Angaben zur gewünschten Dienstleistung, abgebildet. Diese Daten werden im Dialog des Operators mit dem Kunden ergänzt bzw. präzisiert.
Während der Zeit der Audioverbindung zwischen Kunden und Operator bleibt der Operator zur Anbahnung bzw. zur Erbringung der vom Kunden gewünschten Dienstleistung mit dem Internet verbunden.
Nach Abschluß der Verbindung zum Kunden wird auch die Audio-Verbindung zwischen CT-Server und Operator abgebrochen. Der Operator ist damit zur Entgegennahme des Anrufs eines weiteren Kunden bereit. Die virtuelle Verbindung zum WEB-Server bleibt bis zur Abmeldung des Operators erhalten.

Eine weitere denkbare Ausführungsform des erfindungsgemäßen Verfahrens beinhaltet eine Lösung, bei der nach Herstellung der Verbindung zwischen Kunden und Call-Center-Server automatisch ein Operator mit zentraler Vermittlungsfunktion angewählt wird. In einem solchen Fall wird die Anschlußkennung des anrufenden Kunden ebenfalls zum Zentralen Operator durchgestellt. Der oben beschriebene Verfahrensablauf erfolgt dabei über den zentralen Operator.

## Patentansprüche

1. Verfahren zum Betreiben eines globalen, virtuellen Call-Centers, bei dem bei Anruf eines Kunden nach Herstellung der Verbindung zwischen Kunden und Call-Center-Server des Call-Centers Daten erfaßt bzw. abgefragt werden, die eine örtliche Identifizierung des Kommunikationsendgerätes und/oder eine Identifizierung der Person des anrufenden Kunden, beispielsweise nach Zuordnung zu einem Sprachkreis und/oder Zuordnung zu einer Kundengruppe, ermöglichen, und daß alle erfaßten Daten gespeichert werden, daß zur Auswahl eines Operators die Daten des Kunden über eine als Entscheidungssystem ausgebildete Suchroutine mit vergleichbaren gespeicherten Daten der für das Call-Center angemeldeten Operatoren verglichen werden, und daß vom WEB-Server bereits erfaßte Daten, wie z. B. Rufnummer, Angaben zur Person des Anrufers und Angaben zur gewünschten Dienstleistung für die Übertragung zum ausgewählten Operator und zur Darstellung auf dem WEB-Browser-Fenster des ausgewählten Operators bereitgestellt werden,
**dadurch gekennzeichnet,**
- **daß** nach Ermittlung eines über das WEB angemeldeten, für den Kunden geeigneten Operators, automatisch vom Call-Center-Server eine virtuelle Verbindung über ein paketorientiertes Datennetz zu dem WEB-Browser des ausgewählten Operators hergestellt wird,
- **daß** die auf dem WEB-Browser-Fenster des Bildschirms des Operators abgebildeten Daten des Kunden im Dialog zwischen dem Operator und dem Kunden ergänzt bzw. präzisiert werden, und daß die ergänzten und präzisierten Daten zum Call-Center-Server zurückgesendet und zentral gespeichert werden.

2. Verfahren nach Anspruch 1, **dadurch gekennzeichnet, daß** zur örtlichen Identifizierung des Kommunikationsgerätes des anrufenden Kunden die Anschlußkennung des Kundenanschlusses erfaßt und ausgewertet wird.

3. Verfahren nach Anspruch 1, **dadurch gekennzeichnet, daß** nach Anruf des Kunden anhand bereits vom Kunden während der Begrüßung eingegebener Sprachinformationen bzw. durch gezielte Abfrage mittels eines sprachgestützten Suchalgorithmus automatisch geprüft wird, welche Sprache der Kunde spricht und welchen Informationswunsch zu welchem Zeitpunkt der Kunde hat, und daß diese Information ebenfalls in den Suchalgorithmus des Entscheidungssystems für die Ermittlung eines für den Kunden geeigneten Operators einbezogen wird.

4. Verfahren nach Anspruch 1 und 3, **dadurch gekennzeichnet, daß** die Abfrage des Kunden nach seinem Informationswunsch über ein Sprachdialogsystem in der Muttersprache des Kunden erfolgt.

5. Verfahren nach Anspruch 1, **dadurch gekennzeichnet, daß** die Verbindung zwischen dem Call-Center-Server und dem WEB-Browser des für den Kunden ausgewählten Operators vom Call-Center-Server als Audioverbindung über konventionelle Telefonnetze aufgebaut wird.

6. Verfahren nach Anspruch 1, **dadurch gekennzeichnet, daß** die Verbindung zwischen dem Call-Center-Server und dem Kommunikationsendgerät des für den Kunden ausgewählten Operators vom Call-Center-Server als Audioverbindung mit paketorientiertem Protokoll , zum Beispiel über Internettelefonie, aufgebaut wird.

## Claims

1. Method for operating a global, virtual call center, wherein, when a customer calls, data are acquired or queried after establishment of the connection between the customer and the call center server of the call center, said data permitting identification of the location of the communications terminal device and/or personal identification of the calling customer, for example by allocation to a language group and/or allocation to a customer group, and that all acquired data are stored, that in order to select an operator a search routine designed as a decision system compares the customer data with comparable stored data of the operators logged into the call center, and that the Web server prepares, for transmission to the selected operator and for display in the Web browser window of the selected operator, the already acquired data, such as subscriber number, information on the identity of the caller, and information on the service desired,
**characterized in that:**
- after determining an operator logged in over the Web and suitable for the customer, the call center server automatically establishes a virtual connection through a packet-oriented data network to the Web browser of the selected operator,
- the customer data displayed in the Web browser window of the operator's screen is supplemented or defined more precisely in a dialog between the operator and the customer, and **in that** the supplemented and more precisely defined data are returned to the call center server and centrally stored.

2. Method according to claim 1, **characterized in that** the terminal line identification of the customer connection is acquired and analyzed for local identification of the communication terminal of the calling customer.

3. Method according to claim 1, **characterized in that** after the customer calls, an automatic test is performed with a voice-operated search algorithm, using speech information already entered by the customer during the greeting or by directed query, to determine the language the customer speaks and what information the customer desires at what point in time, and **in that** this information is likewise considered in the search algorithm of the decision system for determining a suitable operator for the customer.

4. Method according to claims 1 and 3, **characterized in that** the query to the customer concerning the information he desires is accomplished by an speech dialog system in the customer's native language.

5. Method according to claim 1, **characterized in that** the connection between the call center server and the web browser of the operator selected for the customer by the call center server is established as an audio connection over conventional telephone networks.

6. Method according to claim 1, **characterized in that** the connection between the call center server and the communications terminal device of the operator selected for the customer by the call center server is established as an audio connection with a packet-oriented protocol, for example via Internet telephony.

## Revendications

1. Procédé d'exploitation d'un centre d'appel virtuel global, dans lequel, en cas d'appel d'un client, des données sont saisies ou consultées après établissement de la communication entre le client et le serveur du centre d'appel, permettant une identification locale de l'équipement terminal de communication et/ou une identification de la personne appelante, par exemple par assignation à un groupe linguistique et/ou à une catégorie de clients, toutes les données saisies étant mémorisées et les données du client étant, aux fins du choix d'un opérateur, comparées au moyen d'une routine de recherche conçue comme système décisionnel et contenant des données mémorisées comparables des opérateurs enregistrés pour le centre d'appel, le serveur web mettant à disposition les données déjà saisies, tels que numéro d'appel, indications sur la personne de l'appelant et sur la prestation souhaitée, pour transmission à l'opérateur choisi et pour affichage sur la fenêtre du navigateur Web correspondant à l'opérateur choisi,
**caractérisé en ce que**
- après détermination d'un opérateur approprié pour le client et enregistré sur le Web, le serveur du centre d'appel établit automatiquement une liaison virtuelle vers le navigateur Web de l'opérateur choisi via un réseau de communication de données par paquets,
- les données du client affichées sur la fenêtre du navigateur Web sur l'écran de l'opérateur sont complétées ou précisées en dialogue entre l'opérateur et le client, les données complétées et précisées étant renvoyées au serveur du centre d'appel et sauvegardées au niveau central.

2. Procédé selon la revendication 1, **caractérisé en ce que**, pour l'identification locale de l'équipement de communication du client appelant, l'indicatif de raccordement du client est saisi et analysé.

3. Procédé selon la revendication 1, **caractérisé en ce que**, après l'appel du client et sur la base d'informations vocales déjà données par le client dans la phase d'accueil ou par interrogation ciblée à l'aide d'un algorithme de recherche à base vocale, il est automatiquement déterminé quelle langue le client parle, quelles informations le client désire et quand il souhaite les obtenir, ces information étant également intégrées dans l'algorithme de recherche du système décisionnel pour le choix d'un opérateur approprié pour le client.

4. Procédé selon les revendications 1 et 3, **caractérisé en ce que** l'interrogation du client concernant les informations qu'il désire est menée à l'aide d'un système de dialogue vocal dans la langue maternelle du client.

5. Procédé selon là revendication 1, **caractérisé en ce que** la liaison entre le serveur du centre d'appel et le navigateur Web de l'opérateur choisi pour le client est établie par le serveur du centre d'appel comme liaison audio empruntant des réseaux téléphoniques conventionnels.

6. Procédé selon la revendication 1, **caractérisé en ce que** la liaison entre le serveur du centre d'appel et l'équipement terminal de communication de l'opérateur choisi pour le client est établie par le serveur du centre d'appel comme liaison audio en protocole paquet, par exemple en téléphonie Internet.
